(19) **Europäisches Patentamt**

**European Patent Office**

**Office européen des brevets**

(11) **EP 1 024 709 B1**

(12) **EUROPEAN PATENT SPECIFICATION**

(45) Date of publication and mention
of the grant of the patent:
**14.06.2006 Bulletin 2006/24**

(21) Application number: **98950034.3**

(22) Date of filing: **14.09.1998**

(51) Int Cl.:
*A23L 1/305* (2006.01)      *A61K 31/195* (2006.01)
*A23K 1/16* (2006.01)

(86) International application number:
**PCT/EP1998/005843**

(87) International publication number:
**WO 1999/013738 (25.03.1999 Gazette 1999/12)**

(54) **USE OF AN ORGAN-SPECIFIC NUTRITIONAL COMPOSITION**

VERWENDUNG EINES ORGANSPEZIFISCHEN ERNÄHRUNGMITTELS

UTILISATION D'UNE COMPOSITION ALIMENTAIRE SPECIFIQUE A UN ORGANE

(84) Designated Contracting States:
**AT BE CH DE DK ES FI FR GB GR IE IT LI LU NL PT SE**

(30) Priority: **16.09.1997 EP 97202853**

(43) Date of publication of application:
**09.08.2000 Bulletin 2000/32**

(73) Proprietor: **SOCIETE DES PRODUITS NESTLE S.A.
1800 Vevey (CH)**

(72) Inventors:
• **BALLEVRE, Olivier**
  CH-1012 Lausanne (CH)
• **BOVETTO, Lionel**
  F-74500 Larringes (FR)
• **CHARRIER-BROMONT, Sophie**
  F-63730 Corent (FR)
• **GRIZARD, Jean**
  F-63400 Chamalières (FR)
• **MAIRE, Jean-Claude**
  CH-1092 Belmont sur Lausanne (CH)

(74) Representative: **Lock, Graham James et al
Fry Heath & Spence LLP
The Gables
Massetts Road
Horley,
Surrey RH6 7DQ (GB)**

(56) References cited:
**EP-A- 0 017 867           EP-A- 0 189 161
EP-A- 0 322 589           EP-A- 0 704 218
WO-A-92/20707           WO-A-97/39641
US-A- 5 221 668           US-A- 5 580 903**

• **DATABASE WPI Section Ch, Week 9202 Derwent Publications Ltd., London, GB; Class B05, AN 92-013563 XP002058210 -& JP 03 264525 A (OTSUKA SEIYAKU KYOG) , 25 November 1991**
• **ZOLI G. ET AL: 'A RANDOMIZED CONTROLLED STUDY COMPARING ELEMENTAL DIET AND STEROID TREATMENT IN CROHN'S DISEASE' ALIMENTARY PHARMACOLOGY AND THERAPEUTICS vol. 11, no. 4, August 1997, BLACKWELL SCIENTIFIC PUBLICATIONS LTD., CAMBRIDGE, GB, pages 735 - 740, XP009012856**
• **ECKMAN E.A. ET AL: 'DIETARY CHANGES IMPROVE SURVIVAL OF CFTR S489X HOMOZYGOUS MUTANT MOUSE' AMERICAN JOURNAL OF PHYSIOLOGY vol. 269, no. 5, November 1995, AMERICAN PHYSIOLOGICAL SOCIETY, BETHESDA, MD, US, pages L625 - L630, XP009012858**
• **BOZA J. ET AL: 'EFFECTS OF NATIVE AND HYDROLYZED WHEY PROTEIN ON INTESTINAL REPAIR OF SEVERELY STARVED RATS AT WEANING' JOURNAL OF PEDIATRIC GASTROENTEROLOGY AND NUTRITION vol. 22, no. 2, February 1996, RAVEN PRESS, NEW YORK, NY, US, pages 186 - 193, XP009012857**

**Description**

Field of the Invention

This invention relates to a method of providing nutrition to a patient for causing a desired effect in a selected organ; for example increasing the protein concentration or rate of protein synthesis in the organ.

Background to the Invention

Nutritional formulas based upon naturally occurring proteins are well known in infant nutrition and clinical nutrition; especially formulas based upon milk and soy proteins. Further, hydrolysates of these proteins are commonly used in infant nutrition and clinical nutrition; particularly in hypoallergenic formulas and formulas for patients suffering from various intestinal absorption problems. Also, hydrolysates are commonly used in clinical nutrition due to their reduced tendency, as compared to proteins, to coagulate. It is also known to use free amino acids in nutritional formulas; either alone or in combination with protein or protein hydrolysates. Usually free amino acids are used for patients suffering from particular diseases or conditions such as inflammatory bowel disease, intractable diarrhoea, short bowel syndrome, and the like.

WPI Database abstract number 92-013563 describes solutions which contain free amino acids and dipeptides of glutamine and branched chain amino acids for maintaining and improving intestinal tract functions, preventing catabolism of muscular proteins and accelerating synthesis of tissue proteins.

EP-A-0189161 describes an enteral nutritional hypo-allergenic formula. The formula contains carbohydrates, lipids, protein hydrolysates, vitamins and minerals and a starch modified by octenyl succinic anhydride which is utilised as the sole lipid emulsifying agent.

US 5221668 describes a liquid nutritional product comprising a protein system comprising by weight 20-30% lactalbumin hydrolysate, 60-70% partially hydrolysed sodium caseinate and about 8-14% L-arginine. The product is specifically for trauma and surgery patients.

EP-A-0704218 describes a product for use as a bone reinforcing agent which comprises a basic peptide fraction derived from milk. The basic peptide fraction is obtained by preparing milk or a raw material derived from milk in a cation exchange resin and eluting the adhered fraction. It is suggested that the product promotes growth of osteoblasts and suppresses resorption of osteoclasts.

US 5580903 describes a method for treating a patient in need of stimulation of hepatocyte mitosis which comprises administering to said patient an effective amount of alanine and/or glutamine.

WO 97/39641 describes an additive for use in an energy supplement or metabolic nutrient in the form of a beverage or other nutrient for athletes or others in need of increased glycogen level. The additive comprises a protein hydrolysate which can be of animal or vegetable origin.

In all cases, the protein, hydrolysates or free amino acids in the nutritional formulas are intended to provide a source of amino acids to meet the general amino acid needs of the patient. Whether protein, hydrolysate or free amino acid, or a mixture of any of these is used, usually depends upon the condition of the intended consumer. If the intended consumer is a normal, healthy person, whole dietary protein is generally used. However, if the person suffers from a particular disease or condition, or is allergic to whole protein or is at risk of developing an allergy, a hydrolysate or free amino acid mix which the person is better able to tolerate or absorb is generally used.

There is also an interest in using protein hydrolysates in nutrition since it is generally accepted that protein hydrolysates are more rapidly absorbed in the intestine than whole protein or free amino acids (Rerat A.A. ; 1993; Proceedings of the Nutrition Society, 52,335-344). However, it is not clear whether this faster absorption translates into better nitrogen utilisation since studies carried out to date have provided conflicting results (Collin-Vidal *et al;* 1994; Endocrinol. Metab., 30, E 907-914). Further, this interest is in the sense of providing a source of amino acids to meet the general amino acid needs of the patient and not to specifically provide for the needs of individual organs.

However, in many instances, a person may be suffering from organ specific problems such as depletion of cells, incomplete or improper functioning, underdevelopment or fatigue, in the organs. Providing nutrition to the person in general sense, although beneficial, does not address these organ specific problems.

Various naturally-occurring and synthetic peptides have been reported in the literature as being useful for stimulating the growth of specific tissue. For example, international patent publication WO 92/20707 discloses certain bombesin analogs which may be used to stimulate or antagonise growth of lung tissue. Bombesin itself is a peptide of 14 amino acids which is isolated from the skin of the frog Bombina Bombina. As another example, European patent 0017867 discloses the use of a hydrolysate of a blood plasma extract as an agent for increasing liver growth. Other synthetic peptides for increasing liver growth are disclosed in Pickart *et al*; 1973; Biochem. Biophys. Res. Commun. 54 (2), 562-6 (Gly-His-Lys); and Japanese patent application 05-229940 (di- and tri-peptides containing Ala and Gln). However these peptides are not considered dietary protein and it is not practicable to use them as the primary protein source in nutritional formulas.

Alimentary Pharmacology and Therapeutics, Vol. 11, No. 4, p 735-740 discloses the use of an oral elemental diet (Peptamen) as a primary treatment for Crohn's disease.

American Journal of Physiology, Vol. 269, No. 5, p L625-L630 disclose the use of Peptamen as an elemental diet for CFTR 5489X homozygous mutant mice resulting in improved survival rate due to a reduction of intestinal obstruction and a reduction in dilation of crypt cells.

Journal of Pediatric Gastroenterology and Nutrition, 22, 2, 186-193 discloses the use of hydrolysed when protein for intestinal repair of malnourished rats at meaning resulting in an improvement of parameters evalutated including intestinal permeability to macro molecules, enzymatic activity of jejunum and liver.

It has now been discovered that the form in which dietary protein is provided has a selective effect on the protein concentration, RNA concentration, ribosomal efficacy, and rate of protein synthesis in different organs. This offers the advantage of being able to promote the growth or recovery of a particular organ by providing the dietary protein in a form which increases the protein concentration or the rate of protein synthesis, or both, in that organ.

Accordingly, this invention provides a method of providing a nutritional formula as defined in the appended claims.

Without wishing to be bound by theory, it is believed that protein hydrolysates having a higher degree of hydrolysis are rapidly digested and absorbed in the upper small intestine. Therefore protein substrate is available for protein synthesis in the upper small intestine. In this way, the upper small intestine may be targeted. Intact protein and protein hydrolysates having a lower degree of hydrolysis take longer to digest and are more slowly absorbed in the lower small intestine. Therefore protein substrate is available for protein synthesis in the lower small intestine. Also, the lower rate of absorption may result in more protein substrate being available for protein synthesis in the muscles due to the decrease in liver oxidation. In this way, the lower small intestine and muscles may be targeted.

The source of milk protein is in the form of a protein hydrolysate, or free amino acids, or combinations thereof. Preferably the protein hydrolysates are hydrolysates of milk protein or a peptide mixture isolated from hydrolysates of milk protein.

In one specific embodiment, this invention provides use of a protein hydrolysate having a degree of hydrolysis of at least about 30% in the preparation of a nutritional formula for increasing protein concentration and synthesis in the small intestine. Preferably the protein hydrolysate comprises more than about 30% by weight of di- and tri-peptides. Further, the protein hydrolysate preferably has a non protein nitrogen concentration of at least about 85% of total nitrogen.

Preferably, the formula is used to treat patients suffering from illnesses or damage to the duodenum and jejunum and to promote recovery of the duodenum and jejunum. The method is more preferably used to treat patients suffering from illnesses or damage to the duodenum and to promote recovery of the duodenum.

Preferably the protein hydrolysate comprises more than about 20% by weight of di- and tri-peptides. Further, the protein hydrolysate preferably has a non protein nitrogen concentration of at least about 60% of total nitrogen.

Preferably, the method may be used to treat patients suffering from illnesses or damage to the jejunum to promote recovery of the jejunum.

Preferably this invention provides use of a protein hydrolysate having a degree of hydrolysis of at least about 30% in the manufacture of a formula for the treatment of a patient suffering from illness of or damage to the duodenum.

This invention can be used to provide dietary protein in the form of free amino acids for maintaining muscle protein synthesis and for the prophylaxis or treatment of muscular atrophy.

Preferably the nutritional formula for increasing protein concentration and synthesis in the intestine comprises: a source of dietary protein in the form of a protein hydrolysate having a degree of hydrolysis of at least about 30%, a non protein nitrogen concentration of at least about 85% of total nitrogen, and comprising more than about 30% by weight of di- and tri-peptides; a carbohydrate source; and a lipid source.

Preferably at least about 60% of the components of the protein hydrolysate have a molecular weight less than about 367; more preferably at least about 50% of the components of the protein hydrolysate have a molecular weight of about 127 to about 367.

The nutritional formula is preferably an enterally administrable formula; for example in the form of a powder, a liquid concentrate, or a ready-to-drink beverage.

Embodiments of the invention are now described by way of example only.

Detailed Description of Preferred Embodiments of the Invention

In this specification, the term "degree of hydrolysis" (DH) means the percentage of nitrogen in the form of amino nitrogen as compared to total nitrogen. It is a measure of the extent to which the protein has been hydrolysed.

It has been discovered that the form in which dietary protein is consumed influences various organs to different extents. This provides the significant advantage that the growth or recovery of a specific organ may be selectively enhanced through nutrition. All that is required is to specifically enhance the growth or recovery of an organ is administer a nutritional formula which contains the dietary protein in the correct form.

The dietary protein which is used is milk proteins mixtures of free amino acids; or combinations thereof. Milk proteins such as casein and whey protein are particularly preferred.

For targeting nutrition to the small intestine, one suitable form of the dietary protein is milk protein hydrolysate. Casein and whey protein hydrolysates are preferred. The extent to which the protein is hydrolysed influences the area of the intestine in which the protein is digested and used for protein synthesis.

In particular, hydrolysates having a degree of hydrolysis of about 10% to about 15%, are found to increase relative weight of the liver as compared to free amino acid mixes. Hydrolysates having a degree of hydrolysis of about 15% to about 25% are found to increase the concentration of protein in the jejunum, the relative weight of the jejunum and the rate of protein synthesis in the jejunum. Highly hydrolysed protein which has a degree of hydrolysis of greater than 25% or which contains more than 25% by weight of di- and tri-peptides, more preferably greater than 30%, is found to increase the rate of protein synthesis in the jejunum and the duodenum; particularly the duodenum.

The protein hydrolysates may be produced using procedures which are well known in the art or may be obtained commercially. For example, nutritional formulas containing hydrolysates having a degree of hydrolysis less than about 15% are commercially available from Nestlé Nutrition Company under the trade mark Peptamen®. Hydrolysates having a degree of hydrolysis above about 15% may be prepared using the procedure described in EP 0322589.

The dietary protein may also be in the form of a mix of free amino acids: preferably such that the mix provides a balanced amino acid profile. Dietary protein in the form of a mix of free amino acids is found to increase the relative weight of the jejunurn and the rate of protein synthesis in the jejunum.

It is also possible to provide the dietary protein in a variety of forms such that several organs are simultaneously provided specific nutrition.

The source of dietary protein preferably provides about 5% to about 30% of the energy of the nutritional formula; for example about 10% to about 20% of the energy. The remaining energy of the nutritional formula may be provided in the form of carbohydrates and fats.

If the nutritional formula includes a fat source, the fat source preferably provides about 5% to about 55% of the energy of the nutritional formula; for example about 20% to about 50% of the energy. The lipids making up the fat source may be any suitable fat or fat mixture. Vegetable fats are particularly suitable; for example soy oil, palm oil, coconut oil, safflower oil, sunflower oil, corn oil, canola oil, lecithins, and the like. Animal fats such as milk fats may also be added if desired. The lipids may also include medium-chain triglycerides: for example up to about 80% by weight of lipids as medium-chain triglvcerides. Fractionated coconut oil is a suitable source of medium-chain triglycerides.

If the nutritional formula includes a carbohydrate source, the carbohydrate source preferably provides about 40% to about 80% of the energy of the nutritional formula. Any suitable carbohydrates may be used, for example sucrose, lactose, glucose, fructose, corn syrup solids, and maltodextrins, and mixtures thereof.

Dietary fibre may also be added if desired. Numerous types of dietary fibre are available. Suitable sources of dietary fibre, among others, include soy, pea, oat, pectin, guar gum, and gum arabic. If used, the dietary fibre preferably comprises up to about 5% of the weight of the nutritional formula.

Suitable vitamins and minerals may be included in the nutritional formula in the usual manner to meet the appropriate guidelines.

One or more food grade emulsifiers may be incorporated into the nutritional formula if desired; for example diacetyl tartaric acid esters of mono-diglycerides, lecithin and mono- and di-glycerides. Similarly suitable salts and stabilisers may be included.

The nutritional formula may be prepared in any suitable manner. For example, the nutritional formula may be prepared by blending together the source of dietary protein, the carbohydrate source, and the fat source in appropriate proportions. If used, the emulsifiers may be included in the blend. The vitamins and minerals may be added at this point but are usually added later to avoid thermal degradation. Any lipophilic vitamins, emulsifiers and the like may be dissolved into the fat source prior to blending. Water, preferably water which has been subjected to reverse osmosis, may then be mixed in to form a liquid mixture. The temperature of the water is conveniently about 50°C to about 80°C to aid dispersal of the ingredients. Commercially available liquefiers may be used to form the liquid mixture. The liquid mixture is then homogenised; for example in two stages.

The liquid mixture may then be thermally treated to reduce bacterial loads. For example, the liquid mixture may be rapidly heated to a temperature in the range of about 80°C to about 150°C for about 5 seconds to about 5 minutes. This may be carried out by steam injection, autoclave or by heat exchanger, for example a plate heat exchanger.

The liquid mixture may then be cooled to about 60°C to about 85°C; for example by flash cooling. The liquid mixture may then be again homogenised: for example in two stages at about 7 MPa to about 40 MPa in the first stage and abou! 2 MPa to about 14 MPa in the second stage. The homogenised mixture may then be further cooled to add any heat sensitive components; such as vitamins and minerals. The pH and solids content of the homogenised mixture is conveniently standardised at this point.

If it is desired to produce a powdered nutritional formula, the homogenised mixture is transferred to a suitable drying apparatus such as a spray drier or freeze drier and converted to powder. The powder should have a moisture content of less than about 5% by weight.

If it is desired to produce a liquid formula, the homogenised mixture is preferably aseptically filled into suitable containers. Aseptic filling of the containers may be carried out by pre-heating the homogenised mixture (for example to about 75 to 85°C) and then injecting steam into the homogenised mixture to raise the temperature to about 140 to 160°C: for example at about 150°C. The homogenised mixture may then be cooled, for example by flash cooling, to a temperature of about 75 to 85°C. The homogenised mixture may then be homogenised, further cooled to about room temperature and filled into containers. Suitable apparatus for carrying out aseptic filling of this nature is commercially available. The liquid formula may be in the form of a ready to feed formula having a solids content of about 10 to about 14% by weight or may be in the form of a concentrate; usually of solids content of about 20 to about 26% by weight. Flavours may be added to the liquid formulas so that the formulas are provided in the form of convenient, flavoursome, ready-to-drink beverages.

The nutritional formula may be used in the prophylaxis or treatment of a variety of conditions or diseased states. For example, many premature babies suffer from undeveloped intestines. A nutritional formula containing dietary protein in the form of hydrolysed protein or free amino acids may be fed to the babies to promote an increase in protein concentration and protein synthesis in intestinal tissue and hence increase development of the intestine. As a further example, many elderly people suffer from atrophy of the intestine. Hence these nutritional formulas may be fed to the elderly for the prophylaxis or treatment of intestinal atrophy.

Further, nutritional formulas containing dietary protein in the form of hydrolysed protein or free amino acids may be fed to patients who suffer from illnesses or damage to the intestine to promote recovery of the intestine; for example, inflammatory conditions of the gastro-intestinal tract (such as Crohn's disease and sepsis), gut epithelial damage, consequences of severe diarrhoea, post antibiotic colitis, gut surgery, jejunum resection, and atrophy after parenteral feeding.

The amount of the nutritional formula to be administered will vary depending upon the age of the patient, the condition or disease, and the severity of the condition or disease. However the amount may be readily set by a medical practitioner. In general, an amount of the nutritional formula sufficient to provide a daily dosage of dietary protein of about 3g to about 300 g. A daily dosage of dietary protein of about 50 g to about 150 g is preferred for clinical applications.

The nutritional formula may be taken in multiple doses, for example 2 to 10 times a day, to make up the selected daily dosage or may taken in a single dose. If in a single dose form, the nutritional formula is conveniently taken in replacement of a meal. In the case of multiple doses, the nutritional formula is conveniently in the form of a convenience food; for example a ready-to-drink beverage. The nutritional formula may also be administered continuously by means of nasogastric tubes or enteral tubes such as jejunum tubes.

Example 1

a) Whole proteins

An amount of 5 kg of whey protein (obtained from Meggle GmbH under the trade name Globulal 80) is dispersed in demineralised water at 55°C to obtain protein concentration (N*6.38) of 10% by weight. The pH of the dispersion is adjusted by the addition of 190 g of calcium hydroxide and the dispersion is cooled to room temperature. The proteins are then dried by lyophilisation and packaged into metal cans.

The whole proteins have a degree of hydrolysis of about 4.41% and a non protein nitrogen concentration of about 1.1% on the basis of total nitrogen.

b) Hydrolysate 1

An amount of 6.25 kg of whey protein (obtained from Meggle GmbH under the trade name Globulal 80) is dispersed in 50 litres of demineralised water at 55°C. The pH of the dispersion is adjusted to 8.2 by the addition of 1.8 litres of 2M $Ca(OH)_2$. The proteins are then hydrolysed using 30 g of trypsin (Salt free pancreatic trypsin which has an activity of 6.8 AU/g and a chymotrypsin content of less than 5% and which is obtainable from Novo Nordisk Ferment AG, Dittigen, Switzerland). The hydrolysis reaction is continued for 4 hours at 55°C. During the reaction, the pH is regulated to 7.4 by the addition of 1.6N NaOH and 0.4N KOH. The enzymes are then inactivated by heating the reaction mixture to 80°C and holding the mixture at this temperature for about 5 minutes. The mixture is then cooled to 16°C. The hydrolysed proteins are then dried by lyophilisation and packaged into metal cans. A sample of the hydrolysed proteins is then subjected to HPLC gel filtration to determine the molecular weight distribution.

| Molecular weight | Percentage | Cumulative percentage |
|---|---|---|
| 33730 | 0 | 0 |
| 25820 | 2.3 | 2.3 |
| 19860 | 4.3 | 6.6 |
| 15210 | 5.5 | 12.1 |
| 11670 | 6.9 | 19.0 |
| 8933 | 3.9 | 22.9 |
| 6855 | 3.6 | 26.5 |
| 5248 | 3.1 | 29.6 |
| 4027 | 3.7 | 33.3 |
| 3083 | 4.5 | 37.8 |
| 2366 | 9.4 | 47.2 |
| 1811 | 6.9 | 54.1 |
| 1387 | 6.9 | 61.0 |
| 1064 | 3.9 | 64.9 |
| 815 | 9.2 | 74.2 |
| 625 | 6.7 | 80.9 |
| 479 | 1.6 | 82.5 |
| 367 | 1.5 | 84.0 |
| 281 | 3.6 | 87.6 |
| 215 | 8.4 | 96.0 |
| 165 | 3.4 | 99.4 |
| 127 | 0.4 | 99.8 |
| 97 | 0.1 | 99.9 |
| 74 | 0.1 | 100.0 |

The hydrolysate has a degree of hydrolysis of about 14% and a non protein nitrogen concentration of about 54.5% on the basis of total nitrogen.

c) Hydrolysate 2

An amount of 6.25 kg of whey protein (obtained from Meggle GmbH under the trade name Globulal 80) is dispersed in 50 litres of demineralised water at 55°C. The pH of the dispersion is adjusted to 7.5 by the addition of 1.6 litres of 1M $Ca(OH)_2$ and 162 ml of a solution of 1.6M NaOH and 0.4M KOH. The proteins are then hydrolysed using 50 g of trypsin (obtainable from Novo Nordisk Ferment AG). The hydrolysis reaction is continued for 4 hours at 55°C. During the reaction, the pH is regulated to 7.4 by the addition of 1.6N NaOH and 0.4N KOH. The enzymes are then inactivated and non-hydrolysed protein is denatured, by heating the reaction mixture to 90°C and holding the mixture at this temperature for about 5 minutes.

The mixture is then cooled to 56°C and hydrolysed again for 1 hour using 50g of trypsin at 55°C. During the reaction, the pH is regulated to 7.4 by the addition of 1.6N NaOH and 0.4N KOH. The enzymes are then inactivated by heating the reaction mixture to 80°C and holding the mixture at this temperature for about 5 minutes. The mixture is then cooled to 18°C. The hydrolysed proteins are then dried by lyophilisation and packaged into metal cans.

A sample of the hydrolysed proteins is then subjected to HPLC gel filtration to determine the molecular weight distribution.

| Molecular weight | Percentage | Cumulative percentage |
|---|---|---|
| 33730 | 1.0 | 1.0 |
| 25820 | 2.7 | 3.7 |
| 19860 | 3.0 | 6.7 |
| 15240 | 2.8 | 9.5 |
| 11670 | 3.2 | 12.7 |
| 8954 | 2.1 | 14.8 |
| 6855 | 2.2 | 16.9 |
| 5260 | 2.3 | 19.2 |
| 4027 | 3.0 | 22.2 |
| 3090 | 3.8 | 26.0 |
| 2366 | 9.7 | 35.7 |
| 1811 | 7.0 | 42.7 |
| 1390 | 7.5 | 50.2 |
| 1064 | 4.2 | 54.4 |
| 817 | 10.4 | 64.8 |
| 625 | 8.7 | 73.5 |
| 480 | 2.1 | 75.6 |
| 367 | 1.7 | 77.3 |
| 282 | 5.2 | 82.5 |
| 216 | 11.1 | 93.6 |
| 165 | 4.9 | 98.5 |
| 127 | 0.8 | 99.3 |
| 97 | 0.2 | 99.5 |
| 74 | 0.3 | 99.8 |
| 57 | 0.2 | 100.0 |

The hydrolysate has a degree of hydrolysis of about 17.3% and a non protein nitrogen concentration of about 65.9% on the basis of total nitrogen.

d) Hydrolysate 3

An amount of 6.25 kg of whey protein (obtained from Meggle GmbH under the trade name Globulal 80) is dispersed in 50 litres of demineralised water at 55°C. The pH of the dispersion is adjusted to 7.5 by the addition of 1.6 litres of 1M Ca(OH)$_2$ and 162 ml of a solution of 1.6M NaOH and 0.4M KOH. The proteins are then hydrolysed using 250 g of Alcalase 2.4L (EC 940459 - obtainable from Novo Nordisk Ferment AG). The hydrolysis reaction is continued for 4 hours at 55°C. For the first hour of the reaction, the pH is regulated to 7.6 by the addition of 1.6N NaOH and 0.4N KOH.

An amount of 250g ofNeutrase 0.5L (obtainable from Novo Nordisk Ferment AG) is added and the proteins are further hydrolysed for 4 hours at 50°C. The enzymes are then inactivated by heating the reaction mixture to 90°C and holding the mixture at this temperature for about 5 minutes. The reaction mixture is then cooled to 55°C.

The pH of the reaction mixture is adjusted to 7.33 by the addition of 1.6N NaOH and 0.4N KOH and the reaction mixture hydrolysed again for 4 hours using 100g of pancreatin at 55°C. During the reaction, the pH is regulated to 7.5 by the addition of 1M NaOH. The enzymes are then inactivated by heating the reaction mixture to 90°C and holding the mixture at this temperature for about 5 minutes. The mixture is then cooled to 4°C. The hydrolysed proteins are then dried by lyophilisation and packaged into metal cans.

A sample of the hydrolysed proteins is then subjected to HPLC gel filtration to determine the molecular weight distribution.

| Molecular weight (Dalton) | Percentage | Cumulative percentage |
|---|---|---|
| 5248 | 0.1 | 0.1 |
| 3083 | 0.1 | 0.2 |
| 2366 | 0.9 | 1.1 |
| 1811 | 1.2 | 2.3 |
| 1387 | 3.0 | 5.3 |
| 1064 | 1.4 | 6.7 |
| 815 | 6.7 | 13.4 |
| 625 | 14.2 | 27.6 |
| 479 | 5.3 | 32.9 |
| 367 | 1.6 | 34.5 |
| 281 | 10.3 | 44.8 |
| 215 | 22.2 | 67.0 |
| 165 | 14.5 | 82.4 |
| 127 | 6.8 | 89.2 |
| 97 | 10.5 | 99.7 |
| 74 | 0.2 | 99.9 |
| 57 | 0.1 | 100.00 |

The hydrolysate has a degree of hydrolysis of about 35% and a non protein nitrogen concentration of about 92.6% on the basis of total nitrogen. The hydrolysate is rich in small peptides, especially di- and tri-peptides which have a molecular weight of about 127 to 367.

Example 2

a) Experimental Feeds

Five different feeds are used in the trials. The overall composition of these feeds is given in table 1.

Table 1: Feed composition

| | Feed 1 (g/100g) | Feed 2 (g/100g) | Feed 3 (g/100g) | Feed 4 (g/100g) | Feed 5 (g/100g) |
|---|---|---|---|---|---|
| Protein source | 14.62 | 14.77 | 14.78 | 14.93 | 15.51 |
| Carbohydrate | 64.7 | 64.4 | 64.1 | 63.4 | 65.4 |
| Lipids | 8.21 | 8.27 | 8.26 | 8.37 | 7.90 |
| Minerals | 6.18 | 5.72 | 5.69 | 5.07 | 6.38 |
| Ash | 2.98 | 3.00 | 3.00 | 3.04 | 2.87 |

The values are quoted as g of component per 100a of dry matter. The energy provided by all feeds is from 405.9 to 412.5 kCal/100 g. The protein sources used in each feed are different and are as given in table 2.

Table 2 - Protein Source for feeds

| Feed | Protein Source |
|---|---|
| 1 | whole protein from example 1 |

Table continued

| Feed | Protein Source |
|---|---|
| 2 | Hydrolysate 1 from example 1 |
| 3 | Hydrolysate 2 from example 1 |
| 4 | Hydrolysate 3 from example 1 |
| 5 | Free amino acids |

The amino acid composition of each protein source is given in table 3.

Table 3 - Amino Acid Composition of Protein Source

| Amino Acid | Feed 1 (g/100g) | Feed 2 (g/100g) | Feed 3 (g/100g) | Feed 4 (g/100g) | Feed 5 (g/100g) |
|---|---|---|---|---|---|
| Asp | 1.00 | 1.01 | 1.01 | 1.02 | 1.06 |
| Asn | 0.66 | 0.67 | 0.67 | 0.68 | 0.71 |
| Thr | 0.77 | 0.78 | 0.78 | 0.79 | 0.82 |
| Ser | 0.72 | 0.73 | 0.73 | 0.73 | 0.76 |
| Glu | 1.60 | 1.62 | 1.62 | 1.64 | 1.70 |
| Gln | 0.86 | 0.87 | 0.87 | 0.88 | 0.91 |
| Pro | 0.60 | 0.61 | 0.61 | 0.62 | 0.64 |
| Gly | 0.29 | 0.30 | 0.30 | 0.30 | 0.31 |
| Ala | 0.68 | 0.69 | 0.69 | 0.70 | 0.72 |
| Val | 0.71 | 0.72 | 0.72 | 0.72 | 0.75 |
| Cys[1] | 0.43 | 0.43 | 0.43 | 0.43 | 0.45 |
| Met | 0.29 | 0.30 | 0.30 | 0.30 | 0.31 |
| Ile | 0.74 | 0.74 | 0.74 | 0.75 | 0.78 |
| Leu | 1.80 | 1.82 | 1.82 | 1.84 | 1.91 |
| Tyr | 0.51 | 0.51 | 0.51 | 0.52 | 0.54 |
| Phe | 0.53 | 0.54 | 0.54 | 0.54 | 0.56 |
| Lys | 1.43 | 1.44 | 1.44 | 1.46 | 1.51 |
| His | 0.27 | 0.28 | 0.28 | 0.28 | 0.29 |
| Arg | 0.42 | 0.42 | 0.42 | 0.43 | 0.44 |
| Trp | 0.31 | 0.31 | 0.31 | 0.32 | 0.33 |
| | | | | | |
| Total amino acid | 14.62 | 14.77 | 14.78 | 14.93 | 15.51 |
| (1) in the form of cystine for Feed 5. | | | | | |

b) Experimental Protocol and weight determination

A group of 40 male, Sprague Dawley rats, supplied by IFFA CREDO of 1'Arbresle. France are used. The rats have an average weight of 82.3 g $\pm$ 1.0. The rats are lodged in separate cages which are illuminated from 7.30 am to 7 pm. For a few days prior to the trials, the rats are allowed to feed *ad libitum* on a standard, pelleted food. The rats have free access to water.

Two days prior to the trials, the rats are separated into 5 groups of 8 rats. Each group of rats is fed, *ad libitum,* one of feeds 1 to 5 for an adaptation period of 2 days. Starting with the first day of the trial, each day at 3 am, 7 am, 11 am, 3 pm, 7 pm and 11 pm, the rats of each group are then fed a precisely metered amount of the feed which they had

9

received during the adaptation period. The feeding regime is continued for a period of 15 days. Each rat is weighed each day.

On the 16th day, a radioactive mixture is prepared by adding 1.7 g of a solution containing $^{14}$C Phe (170 $\mu$Ci per 2.9 $\mu$mol) to 9.3 g of a solution containing 30.2 o/l Phe (non radioactive). Half of the rats in each group are anaesthetised and slaughtered at 1.30 pm: the other half are anaesthetised and slaughtered at 3 pm. About 20 minutes prior to being slaughtered, the radioactive mixture is injected intravenously into each rat at 2 ml/200g of body weight.

After slaughter, the blood of each rat is removed and immediately centrifuged at 4°C. The plasma is then separated into fractions and the fractions stored at -20°C. The liver of each rat is rapidly removed, washed with a cold solution containing 9% NaCl, dried, weighed, and frozen in liquid nitrogen. The intestine of each rat is removed, emptied and rinsed in a 5% solution of trichloroacetic acid and separated into three fractions; the whole duodenum, about 13 cm of the jejunum and the remainder of the intestine. Each fraction is dried, weighed, and frozen in liquid nitrogen. The fractions are ground in the liquid nitrogen prior to use. The stomach is removed and weighed before and after emptying. The muscles (gastrocnemius, soleus, and extensor digitorum longus) are removed, de-fatted, washed, dried, weighed and frozen in liquid nitrogen.

The mean weight of the rats at slaughter and the mean weight of the body parts are as follows:

| | | Feed 1 | Feed 2 | Feed 3 | Feed 4 | Feed 5 |
|---|---|---|---|---|---|---|
| Body weight/g | | 173.9 | 159.4 | 164.2 | 154.1 | 157.7 |
| Stomach | Absolute g | 1.19 | 1.11 | 1.32 | 1.25 | 1.32 |
| | Relative % | 0.68 | 0.70 | 0.78 | 0.80 | 0.84 |
| Intestine | Absolute g | 5.95 | 5.51 | 5.66 | 6.02 | 5.65 |
| | Relative % | 3.42 | 3.46 | 3.44 | 3.90 | 3.59 |
| Duodenum | Absolute g | 0.40 | 0.34 | 0.34 | 0.36 | 0.38 |
| | Relative % | 0.23 | 0.21 | 0.21 | 0.24 | 0.24 |
| Jejunum | Absolute g | 1.13 | 1.15 | 1.24 | 1.21 | 1.24 |
| | Relative % | 0.65 | 0.73 | 0.76 | 0.78 | 0.79 |
| Liver | Absolute g | 8.59 | 8.40 | 7.87 | 7.37 | 7.29 |
| | Relative % | 4.93 | 5.24 | 4.77 | 4.80 | 4.62 |
| Gastrocnemius | | | | | | |
| | Absolute g | 0.96 | 0.96 | 1.04 | 0.95 | 0.87 |
| | Relative % | 0.55 | 0.60 | 0.64 | 0.62 | 0.55 |
| Soleus | Absolute g | 0.069 | 0.066 | 0.068 | 0.064 | 0.060 |
| | Relative % | 0.040 | 0.041 | 0.042 | 0.042 | 0.038 |
| Extensor | Absolute g | 0.075 | 0.075 | 0.072 | 0.070 | 0.067 |
| | Relative % | 0.043 | 0.047 | 0.044 | 0.046 | 0.042 |

The absolute value is the weight of the organ in grams. The relative value is a percentage based on the weight of the organ per 100g of body weight.

The rats fed with Feeds 1 and 3 have a noticeably higher body weight than those feed with the other feeds. The relative weight of the whole intestine of the rats is significantly ($P<0.05$) higher with Feed 4 than the other feeds. Also, the relative weight of the jejunum of the rats is significantly ($P<0.05$) higher with Feeds 3, 4 and 5 than the other feeds. The weight of the liver of the rats fed with Feed 5 is significantly lower ($P<0.05$) than with the other feeds.

c) Determination of protein and RNA content

Tissue samples of 1 g of muscle, 1 g of liver, and 0.5 to 1 a intestine are extracted with a cold solution of 10% trichloroacetic acid to dissolve free amino acids and precipitate protein. The extract is centrifuged at 4°C and 10000 g for 15 minutes. The residue is extracted with a cold solution of 10% trichloroacetic acid and centrifuged at 4°C and 10000 g for 15 minutes. The extraction and centrifuging procedure is repeated again. The residue is collected and the three filtrates are combined.

A column containing 3 ml of Amberlite resin (AG 50 X8, 100-200 mesh) in H[+] form is neutralised to fix free amino acids. The combined filtrate is added to the column and the column washed three times with distilled water. Free amino acids are then eluted using 4N ammonia. The eluant is collected and the ammonia removed by evaporation under vacuum at 40°C. The dry residue is rehydrated to provide a first amino acid solution having a Phe concentration in the region of about 1 $\mu$mol/ml. The pH of the first amino acid solution is adjusted to 7.

The residue from the centrifuge is extracted with cold 0.2 M perchloric acid and the extract is centrifuged at 4°C and 10000 g for 15 minutes. The residue is again extracted with perchloric acid and centrifuged in the same manner. The residue is then rehydrated in a solution of water and 3N NaOH. An aliquot of the rehydrated residue is collected for quantification of the protein using the bicinchoninic acid method described in Smith *et al*; 1985; <u>Anal. Biochem.</u>, 150, 76-85.

An amount of 3N perchloric acid is added to the remaining rehydrated residue to precipitate protein. The solution is the centrifuged at 4°C at 15000 g for 10 minutes. The RNA concentration in the filtrate is then determined by spec-trophotometrv ($\lambda_1$=232 and $\lambda_2$=260) using the technique of Baillie A.G.S and Garlick, P.J.; 1991; <u>Am. J. Physiol.</u>, 260, E891-E896.

The residue from the centrifuge is hydrolysed using 5.5N HCl at 150°C over 24 hours to liberate Phe. The HCl is evaporated under vacuum and the residue is rehydrated with water to provide a second amino acid solution having a Phe concentration of about 1 $\mu$mol/ml. The pH of the second amino acid solution is adjusted to 7.

d) Determination of Phe radioactivity and rate of Protein synthesis

A Kontron HPLC and Kontron U.V. spectrophotometer ($\lambda$ = 330nm) are used to separate and detect amino acids. Two solvents are used for the mobile phase:

- solvent A comprising 69g of $NaH_2 PO_4$. $H_2O$. 32 ml of $H_3PO_4$, 40g of NaOH particles, a 30% NaOH solution to adjust the pH to 7, and ultra pure water to adjust the volume to 5 litres.
- solvent B comprising 200 ml of solvent A diluted with 300 ml of ultra pure water, 350 ml of methanol, and 150 ml of acetonitrile.

i) Radioactivity of free Phe

The HPLC column is fitted with a Spherisorb OD2 column (5 $\mu$m, 250 x 4.6mm) and is operated at 25°C. An orthophthaldialdehyde solution is added to the first amino acid solution in a mass ratio of 2:1 and the mixture is allowed to react. An amount of 40$\mu$l of the mixture is added to the column. The column is eluted with solvents A and B at various times: the total amount being added at each time being 1 ml/min. The ratio of solvent A to solvent B at each time is 100: 0 at time 0, 40:60 after 7 minutes, 27:73 after 22 minutes, 0:100 after 24 minutes, 0:100 after 26 minutes, and 100:0 after 28 minutes. Elution is continued for 33 minutes. The eluant is collected in fractions of 0.5 ml. Standard solutions containing a mixture of 20 amino acids, including $^{14}$C-Phe, are also run through the column to identify and standardise the amino acid peaks.

The fractions of the first amino acid solution containing the Phe peak are collected and the volume adjusted to 5 ml with ultra pure water. Ten ml of a scintillant (Quick Safe A) is added to the solution. The radioactivity is then determined using a Kontron scintillation detector.

ii) Radioactivity of bound Phe

The HPLC column is fitted with a Spherisorb OD2 column (5 $\mu$m, 250 x 10mm) and is operated at 25°C . An orthophthaldialdehyde solution is added to the second amino acid solution in a mass ratio of 1:1 and the mixture is allowed to react. An amount of 800$\mu$l of the mixture is added to the column. The column is eluted with solvents A and B at various times; the total amount being added at each time being 4.25 ml/min. The ratio of solvent A to solvent B at each time is 100:0 at time 0.50:50 after 7 minutes, 34:66 after 27 minutes, 0:100 after 29 minutes, 0:100 after 32 minutes, and 100:0 after 34 minutes. Elution is continued for 39 minutes. The eluant is collected in fractions of 0.5 ml. Standard solutions containing a mixture of 20 amino acids, including $^{14}$C-Phe, are also run through the column to identify and standardise the amino acid peaks.

The fractions of the second amino acid solution containing the Phe peak are collected and the volume adjusted to 5 ml with ultra pure water. Ten ml of a scintillant (OPTI Phase "Hisafe") is added to the solution. The radioactivity is then determined using a Kontron scintillation detector.

iii) Calculation of the rate of protein synthesis

A measure of the rate of protein synthesis may be obtained using the formula (McNurlan *et al;* 1979; <u>Biochem. J.</u> 178, 373-379):

$$\text{Rate of synthesis (\% per day)} = S_B/(S_A.t)$$

Where $S_B$ is the specific radioactivity value (dpm/μmol) of the bound Phe; $S_A$ is the mean specific radioactivity value (dpm/μmol) of the free Phe: and t is the time in days.

e) Protein and RNA content and rate of protein synthesis.

The protein and RNA content of the different organs and the rate of protein synthesis in the different organs are as follows for each feed:

| **Liver** | Feed 1 | Feed 2 | Feed 3 | Feed 4 | Feed 5 |
|---|---|---|---|---|---|
| Protein Concentration | | | | | |
| mg/g tissue | 139.9 | 160.9 | 156.4 | 165.2 | 147.2 |
| g/100g rat | 0.69 | 0.84 | 0.75 | 0.79 | 0.68 |
| Total protein, g | 1.20 | 1.34 | 1.24 | 1.23 | 1.07 |
| RNA Concentration | | | | | |
| mg/g tissue | 7.89 | 8.10 | 8.00 | 8.20 | 8.17 |
| mg/100g rat | 38.8 | 42.4 | 38.1 | 38.9 | 37.7 |
| Total RNA, mg | 67.47 | 67.93 | 62.73 | 60.43 | 59.45 |
| Protein Synthesis Capacity (mg RNA/g protein) | 56.46 | 51.86 | 51.76 | 50.62 | 56.62 |
| Protein Synthesis Rate (% per day) | 82.29 | 86.94 | 85.55 | 89.68 | 91.53 |
| Daily Protein Synthesis (g protein/day) | 1.01 | 1.18 | 1.08 | 1.16 | 1.01 |
| Ribosomal Efficacy (mg protein/day.mgRNA) | 14.69 | 17.53 | 17.00 | 18.50 | 16.85 |

No significant difference between the effects that the feeds have on the liver are noticed. Feed 2 however appears to provide a larger relative concentration of protein and RNA in the liver.

| **Intestine (Duodenum)** | Feed 1 | Feed 2 | Feed 3 | Feed 4 | Feed 5 |
|---|---|---|---|---|---|
| Protein Concentration | | | | | |
| mg/g tissue | 178.6 | 180.9 | 165.0 | 191.4 | 162.0 |
| g/100g rat | 41.9 | 39.1 1 | 34.2 | 46.4 | 41.1 |
| Total protein, g | 72.0 | 61.8 | 56.0 | 71.3 | 65.0 |
| RNA Concentration | | | | | |
| mg/g tissue | 8.32 | 7.97 | 6.55 | 8.43 | 7.59 |
| mg/100g rat | 1.98 | 1.64 | 1.36 | 2.05 | 1.92 |
| Total RNA, mg | 3.39 | 2.59 | 2.21 | 3.12 | 3.03 |
| Protein Synthesis Capacity (mg RNA/g protein) | 46.23 | 44.46 | 39.69 | 44.23 | 48.03 |
| Protein Synthesis Rate (% per day) | 97.9 | 105.7 | 100.3 | 135.9 | 108.0 |
| Daily Protein Synthesis (g protein/day) | 72.99 | 68.52 | 57.01 | 97.89 | 74.44 |
| Ribosomal Efficacy (mg protein/day.mgRNA) | 21.2 | 25.7 | 25.3 | 30.8 | 23.0 |

Feed 4 has a significant effect ($P < 0.05$) on the protein synthesis rate in the duodenum as compared to the other feeds. Protein and RNA concentrations are raised but not significantly. Further the daily protein synthesis and the ribosomal efficacy are all raised.

| Intestine (Jejunum) | | Feed 1 | Feed 2 | Feed 3 | Feed 4 | Feed 5 |
|---|---|---|---|---|---|---|
| Protein Concentration | | | | | | |
| | mg/g tissue | 109.9 | 109.5 | 112.2 | 106.5 | 110.0 |
| | g/100g rat | 71.7 | 79.6 | 84.1 | 83.8 | 87.1 |
| | Total protein, g | 124.8 | 126.3 | 138.7 | 130.2 | 137.2 |
| RNA Concentration | | | | | | |
| | mg/g tissue | 7.56 | 7.39 | 7.55 | 7.36 | 7.87 |
| | mg/100g rat | 4.90 | 5.38 | 5.71 | 5.82 | 6.23 |
| | Total RNA, mg | 8.49 | 8.50 | 9.34 | 8.98 | 9.79 |
| Protein Synthesis Capacity (mg RNA/g protein) | | 70.35 | 67.48 | 68.31 | 69.58 | 71.70 |
| Protein Synthesis Rate (% per day) | | 89.9 | 88.4 | 103.8 | 111.8 | 109.5 |
| Daily Protein Synthesis (g protein/day) | | 111.6 | 111.8 | 141.4 | 144.9 | 147.7 |
| Ribosomal Efficacy (mg protein/day.mgRNA) | | 13.02 | 13.25 | 15.15 | 16.14 | 15.24 |

The rate of protein synthesis, the daily protein synthesis, and the ribosomal efficacy are significantly ($P<0.05$) raised with feeds 3 to 5 as compared to feeds 1 and 2.

| Muscle (Gastrocnemius) | | Feed 1 | Feed 2 | Feed 3 | Feed 4 | Feed 5 |
|---|---|---|---|---|---|---|
| Protein Concentration | | | | | | |
| | mg/g tissue | 189.0 | 183.2 | 189.8 | 180.7 | 182.4 |
| | g/100g rat | 109.3 | 109.7 | 113.2 | 108.4 | 99.9 |
| | Total protein, g | 188.2 | 174.7 | 185.1 | 166.4 | 157.4 |
| RNA Concentration | | | | | | |
| | mg/g tissue | 2.14 | 2.18 | 1.97 | 1.91 | 1.95 |
| | mg/100g rat | 1.24 | 1.31 | 1.18 | 1.15 | 1.07 |
| | Total RNA, mg | 2.14 | 2.10 | 1.92 | 1.77 | 1.69 |
| Protein Synthesis Capacity (mg RNA/g protein) | | 11.31 | 11.94 | 10.36 | 10.59 | 10.84 |
| Protein Synthesis Rate (% per day) | | 11.00 | 9.87 | 9.53 | 8.83 | 11.26 |
| Daily Protein Synthesis (g protein/day) | | 20.75 | 17.33 | 18.01 | 15.38 | 17.58 |
| Ribosomal Efficacy (mg protein/day.mgRNA) | | 9.69 | 8.57 | 9.17 | 8.24 | 10.33 |

No significant differences are determined. However the daily protein synthesis is reduced with feed 4 when compared to feeds 1 and 5.

## Claims

1. A method of providing a nutritional formula comprising a selected form of hydrolysed milk protein as a protein source for promoting the growth or recovery of a specific organ in a mammal selected from the small intestine or the duodenum, the jejunum, and the liver, wherein the method comprises the steps of determining a specific organ from various organs and hydrolysing a milk protein to a predetermined degree of hydrolysis, such the that degree of hydrolysis determines the organ of which growth or recovery is promoted.

2. A method according to claim 1 wherein the specific organ is the small intestine or duodenum and the predetermined degree of hydrolysis is at least 30%.

3. A method according to Claim 2 in which the hydrolysed milk protein comprises more than about 30% weight of di- and tri-peptides and has a non protein nitrogen concentration of at least about 85% of total nitrogen.

**4.** A method according to Claim 1 wherein the specific organ is the jejunum and the hydrolysed milk protein is

    (i) a protein hydrolysate having a degree of hydrolysis of at least about 15%;
    (ii) free amino acids; or
    (iii) mixtures thereof.

**5.** A method according to Claim 4 in which the hydrolysed milk protein is a protein hydrosylate which comprises more than about 20% by weight of di- and tri-peptides and which has a non protein nitrogen concentration of at least about 60% of total nitrogen.

**6.** A method according to Claim 1 in which the hydrolysed milk protein is in the form of free amino acids.

**7.** A method according to Claim 6 in which the hydrolysed milk protein is used in the preparation of a nutritional formula for mammals having compromised gut function.

**8.** A method according to Claim 1 wherein the specific organ is the liver and the predetermined degree of hydrolysis is 10 to 15%.

**9.** A method according to Claim 1, in which the milk protein hydrolysate is used for the preparation of a nutritional formula for increasing protein concentration and synthesis in underdeveloped intestines of premature babies.

**10.** A method according to Claim 9, in which the milk protein hydrolysate comprises more than about 30% by weight of di- and tri-peptides and has a non protein nitrogen concentration of at least about 85% of total nitrogen.

**11.** A method according to any preceding claim in which the hydrolysed milk protein is hydrolysed whey and/or casein protein.

**Patentansprüche**

**1.** Verfahren zur Bereitstellung einer Nährstoffrezeptur umfassend, eine ausgewählte Form von hydrolysiertem Milchprotein als eine Proteinquelle zum Fördern des Wachstums oder der Besserung eines bestimmten Organs in einem Säuger, ausgewählt aus dem Dünndarm oder dem Zwölffingerdarm, dem Leerdarm und der Leber, wobei das Verfahren die Schritte umfasst, Festlegen eines bestimmten Organs aus mehreren Organen und Hydrolysieren eines Milchproteins auf einen bestimmten Hydrolysegrad, so dass der Hydrolysegrad das Organ festlegt, dessen Wachstum oder Besserung gefördert wird.

**2.** Verfahren nach Anspruch 1, wobei das bestimmte Organ der Dünndarm oder Zwölffingerdarm ist und der bestimmte Hydrolysegrad mindestens 30% ist.

**3.** Verfahren nach Anspruch 2, wobei das hydrolysierte Milchprotein mehr als ungefähr 30 Gew.-% an Di- oder Tri-Peptiden umfasst und eine nicht-Protein Stickstoffkonzentration von mindestens ungefähr 85% des Gesamtstickstoffs aufweist.

**4.** Verfahren nach Anspruch 1, wobei das bestimmte Organ der Leerdarm ist und das hydrolysierte Milchprotein

    (i) ein Proteinhydrolysat mit einem Hydrolysegrad von mindestens ungefähr 15%;
    (ii) freie Aminosäuren; oder
    (iii) Mischungen davon

ist/ sind.

**5.** Verfahren nach Anspruch 4, wobei das hydrolysierte Milchprotein ein Proteinhydrolysat ist, das mehr als ungefähr 20 Gew.-% an Di- und Tri-Peptiden umfasst und das eine nicht-Protein Stickstoffkonzentration von mindestens ungefähr 60% des Gesamtstickstoffs aufweist.

**6.** Verfahren nach Anspruch 1, wobei das hydrolysierte Milchprotein in der Form von freien Aminosäuren ist.

7. Verfahren nach Anspruch 6, wobei das hydrolysierte Milchprotein bei der Herstellung einer Nährstoffrezeptur für Säuger mit beeinträchtigter Darmfunktion verwendet wird.

8. Verfahren nach Anspruch 1, wobei das bestimmte Organ die Leber ist und der bestimmte Hydrolysegrad 10 bis 15% ist.

9. Verfahren nach Anspruch 1, wobei das Milchproteinhydrolysat für die Herstellung einer Nährstoffrezeptur für eine steigende Proteinkonzentration und Synthese in unterentwickelten Därmen von Frühgeburten ist.

10. Verfahren nach Anspruch 9, wobei das Milchproteinhydrolysat mehr als 30 Gew.-% an Di- und Tri-Peptiden umfasst und eine nicht-Protein Stickstoffkonzentration von mindestens ungefähr 85% des Gesamtstickstoffs aufweist.

11. Verfahren nach einem der vorstehenden Ansprüche, wobei das hydrolysierte Milchprotein hydrolysiertes Molken- und/oder Kasein-Protein ist.

## Revendications

1. Procédé pour produire une composition nutritionnelle comprenant une forme sélectionnée de protéine de lait hydrolysée comme source de protéine pour stimuler chez un mammifère la croissance ou le rétablissement d'un organe spécifique choisi parmi l'intestin grêle ou le duodénum, le jéjunum et le foie, le procédé comprenant les étapes consistant à déterminer un organe spécifique parmi divers organes et à hydrolyser une protéine de lait à un degré d'hydrolyse prédéterminé, en sorte que le degré d'hydrolyse détermine l'organe dont la croissance ou le rétablissement est stimulé.

2. Procédé selon la revendication 1, dans lequel l'organe spécifique est l'intestin grêle ou le duodénum, et le degré d'hydrolyse prédéterminé est d'au moins 30 %.

3. Procédé selon la revendication 2, dans lequel la protéine de lait hydrolysée comprend plus d'environ 30 % en poids de di- et tri-peptides et a une concentration en azote non protéique d'au moins environ 85 % de l'azote total.

4. Procédé selon la revendication 1, dans lequel l'organe spécifique est le jéjunum et la protéine de lait hydrolysée consiste en

   (i) un hydrolysat de protéine ayant un degré d'hydrolyse d'au moins environ 15 % ;
   (ii) des acides aminés libres ; ou
   (iii) des mélanges d'entre eux.

5. Procédé selon la revendication 4, dans lequel la protéine de lait hydrolysée est un hydrolysat de protéine qui comprend plus d'environ 20 % en poids de di- et tri-peptides et qui a une concentration en azote non protéique d'au moins environ 60 % de l'azote total.

6. Procédé selon la revendication 1, dans lequel la protéine de lait hydrolysée est sous la forme d'acides aminés libres.

7. Procédé selon la revendication 6, dans lequel la protéine de lait hydrolysée est utilisée dans la préparation d'une composition nutritionnelle pour des mammifères dont la fonction intestinale est altérée.

8. Procédé selon la revendication 1, dans lequel l'organe spécifique est le foie et le degré d'hydrolyse prédéterminé est de 10 à 15 %.

9. Procédé selon la revendication 1, dans lequel l'hydrolysat de protéine de lait est utilisé pour la préparation d'une composition nutritionnelle destinée à augmenter la concentration et la synthèse des protéines dans les intestins sous-développés de bébés prématurés.

10. Procédé selon la revendication 9, dans lequel l'hydrolysat de protéine de lait comprend plus d'environ 30 % en poids de di- et tri-peptides et a une concentration en azote non protéique d'au moins environ 85 % de l'azote total.

11. Procédé selon l'une quelconque des revendications précédentes, dans lequel la protéine de lait hydrolysée est la protéine de lactosérum et/ou la caséine hydrolysée(s).